# EUROPEAN PATENT APPLICATION

(11) **EP 1 867 911 A1**
(43) Date of publication of application: **19.12.2007**
(21) Application number: 07075388.4
(22) Date of filing: 22.05.2007
(51) Int. Cl.: F16M 11/04

(54) **An assembly as well as a carrier, a support and a locking element suitable for use with such an assembly**

(30) Priority: 16.06.2006 NL 1032023
(71) Applicant: Vogel's Holding B.V., 5628 DB Eindhoven (NL)
(72) Inventor: Van Kuijk, Ewald, 5622 GN Eindhoven (NL)
(74) Representative: Veldman-Dijkers, Cornelia G. C.

(57) **Abstract**

An assembly is suitable for supporting an apparatus. The assembly at least comprises a support (2) and a carrier (4) to be attached to the apparatus, which carrier (4) can be detachably coupled to the support (2) by way of a bayonet-type connection, said support (2) and said carrier (4) being rotatable about an axis of rotation relative to each other. The assembly further comprises a locking element (3) which is rotatable about said axis of rotation relative to the support (2) and the carrier (4) from a first position, in which the carrier (4) and the locking element (3) can be coupled to the support (2) by way of the bayonet-type connection, to a second position, in which the bayonet-type connection is locked by the locking element (3).

## Description

An assembly as well as a carrier, a support and a locking element suitable for use with such an assembly.

The invention relates to an assembly suitable for supporting an apparatus, which assembly at least comprises a support and a carrier to be attached to the apparatus, which carrier can be detachably coupled to the support by way of a bayonet-type connection, said support and said carrier being rotatable about an axis of rotation relative to each other.

The invention also relates to a carrier, to a support and to a locking element suitable for use with such an assembly.

With such an assembly, which is known from US-B2-6,708,940, the support is mounted to a horizontally or vertically extending wall, and the carrier is attached to the apparatus to be supported, for example a beamer.

The support is provided with three projecting segments, which can be passed through corresponding recesses in the carrier. By subsequently rotating the carrier about the axis of rotation relative to the support, the carrier is coupled to the support. Such a connection of segments to be inserted into recesses and the subsequently rotation of the segments relative to the recesses for the purpose of effecting a connection is a so-called bayonet-type connection.

Said bayonet-type connection makes it possible on the one hand to effect a robust connection between the carrier and the support, thus realising an adequate fixation of the beamer to the wall, and on the other hand to enable easy detachment of the beamer from the wall, so that the beamer can be stored or used at other locations.

With the assembly according to US-B2-6,708,940, a number of bolts prevent the bayonet-type connection between the carrier and the support from being released.

The drawback of using such bolts is that tightening said bolts is a relatively time-consuming operation, which requires the use of specific tools. Moreover, such bolts mar the appearance of the assembly.

The object of the invention is to provide an assembly in which the bayonet-type connection can be locked in a simple manner.

This object is accomplished with an assembly according to the invention in that the assembly further comprises a locking element which is rotatable about said axis of rotation relative to the support and the carrier from a first position, in which the carrier and the locking element can be coupled to the support by way of the bayonet-type connection, to a second position, in which the bayonet-type connection is locked by the locking element.

The carrier and an the locking element are jointly coupled to the support via the bayonet-type connection. By subsequently rotating the locking element relative to the carrier to the second position, a locked position of the bayonet-type connection is effected in a simple manner. Releasing the bayonet-type connection is not possible in the second position of the locking element. To detach the carrier from the support, the locking element will first have to be moved back to the first position in order to subsequently release the connection between the support on the one hand an the carrier and the locking element on the other hand realised by way of the bayonet-type connection.

One embodiment of the assembly according to the invention is characterised in that the bayonet-type connection comprises a flange connected to the support as well as recesses formed in the carrier and in the locking element, which are positioned opposite each other in the first position of the locking element, through which recesses the flange can be positioned, after which the carrier and the locking element are rotatable about the axis of rotation with respect to the support.

Since the recesses of the carrier and the locking element are positioned opposite each other, coupling of the locking element to the support takes place simultaneously with the coupling of the support to the carrier. In this way a robust connection between the various parts is effected.

Another embodiment of the assembly according to the invention is characterised in that the recesses present in the carrier and in the locking element are staggered relative to each other in the second position.

Since the recesses are staggered relative to each other, it is not possible to remove the flange connected to the support from the recesses, so that the bayonet-type connection is locked in a simple yet effective manner.

Yet another embodiment of the assembly according to the invention is characterised in that the flange comprises a cam which can be positioned in at least one notch formed in the carrier through rotation of the carrier and the locking element relative to the support after the flange has been inserted into the recesses in the carrier and the locking element.

The cam that engages in the notch maintains the bayonet-type connection in a clearly defined position. In addition, a first locking engagement is effected by the cam that engages in the notch.

Yet another embodiment of the assembly according to the invention is characterised in that the locking element and the carrier are locked against rotation relative to each other while the flange is being positioned in the recesses formed in the carrier and the locking element.

In this way it is ensured that the recesses in the carrier and the locking element are and will remain positioned opposite each other while the flange connected to the support is being passed through the recesses. As a result, rotation of the locking element relative to the carrier is only possible after the flange has been passed through the recesses and the carrier and the locking element have been rotated about the axis of rotation relative to the support.

Another embodiment of the assembly according to the invention is characterised in that at least one spring lip connected to the locking element is positioned in at least one lip recess formed in the carrier, or vice versa, in the first position of the locking element relative to the carrier.

As a result of the presence of the lip in the lip recess, a locking engagement of the locking element with respect to the carrier is obtained in their simple manner. After rotation of the carrier and the locking element relative to the support, the spring lip can be moved out of the lip recess against spring force.

Yet another embodiment of the assembly according to the invention is characterised in that the support is provided with at least one notch formed in the circumference thereof, with the spring lip being retained in the lip recess by the support after the flange has been passed through recesses formed in the carrier and the locking element, whilst the spring lip is positioned opposite the notch in the support after rotation of the carrier and the locking element relative to the support.

The notch makes it possible in a simple manner to move the spring lip out of the lip recess against spring force.

Another embodiment of the assembly according to the invention is characterised in that the locking element and the carrier are each provided with at least one opening, which openings are positioned opposite each other in the second position, whilst the assembly is furthermore provided with a lock that can be positioned through said opposite openings.

Because of the presence of a lock passed through the openings, the carrier can only be detached from the support by a person who is able to open the lock. Theft of the carrier and the apparatus attached thereto is thus prevented in an effective manner.

Yet another embodiment of the assembly according to the invention is characterised in that the locking element and the carrier are circular in shape, with the locking element being provided near the outer side with at least one inwardly extending engaging flange, which can be positioned in at least one engaging recess in the carrier, after which the carrier and the locking element can be rotated about the axis of rotation relative to each other to the first position.

In this way the carrier and the locking element can be connected together in a simple manner.

Yet another embodiment of the assembly according to the invention is characterised in that the locking element is provided with at least one operating handle on a side remote from the carrier.

The operating handle makes it easier for a user to rotate the locking element about the axis of rotation.

Yet another embodiment of the assembly according to the invention is characterised in that the carrier is provided with a number of spiral-shaped slots as well as with a number of supporting arms, a first end of which is positioned in one of said slots, whilst a second end remote from said first end can be connected to the apparatus to be supported.

Apparatuses are usually provided with points of attachment, via which the apparatus can be attached to the second ends of the arms. Different apparatuses have points of attachment at different positions, however. Since the supporting arms are movable within the slots, it is possible to find positions of the supporting arms relative to the plates at which the assembly can be attached to the apparatus for practically every apparatus.

Yet another embodiment of the assembly according to the invention is characterised in that the supporting arms are provided with covers.

The covers impart an attractive appearance to the supporting arms. Moreover, the connections between the supporting arms and the apparatus, for example, are hidden from view in a simple manner, so that the connections cannot be easily released by vandals.

The invention will not be explained in more detail with reference to the drawings, in which:
Figure 1 is a perspective, exploded view of the assembly according to the invention;

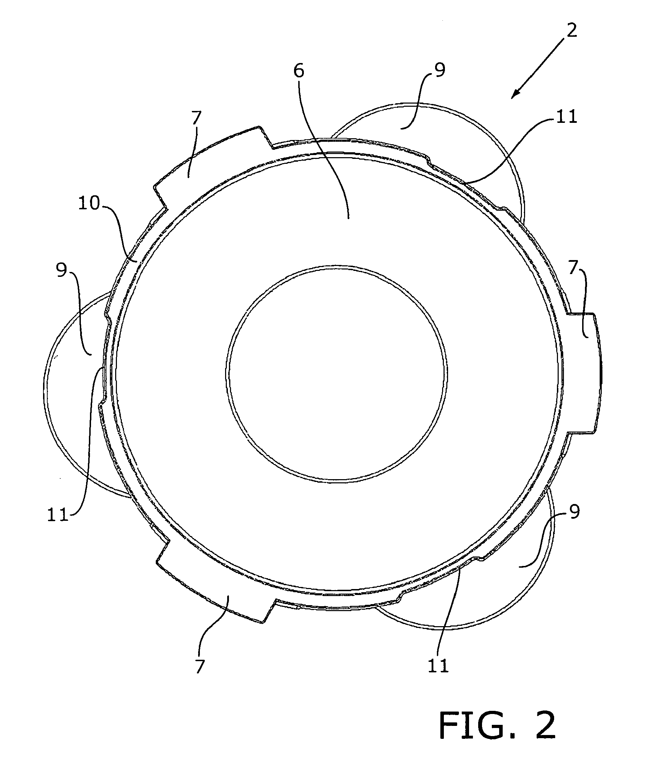

Figure 2 is a bottom view, on a larger scale than in figure 1, of a support of the assembly shown in figure 1;
Figure 3 is a bottom view of a connecting element of the assembly shown in figure 1;
Figure 4 is a bottom view of a part of a carrier of the assembly of figure 1;
Figures 5a-5c are perspective views of the coupling and locking of the carrier to the support;
Figure 6 is a sectional view of the assembly in coupled and locked condition;
Figure 7 is a larger-scale bottom view of the assembly of figure 5b;
Figure 8 is a larger-scale bottom view of the assembly of figure 5c; and
Figure 9 is a survey of various combinations of a carrier with different supports.

Like parts are indicated by the same numerals in the figures.

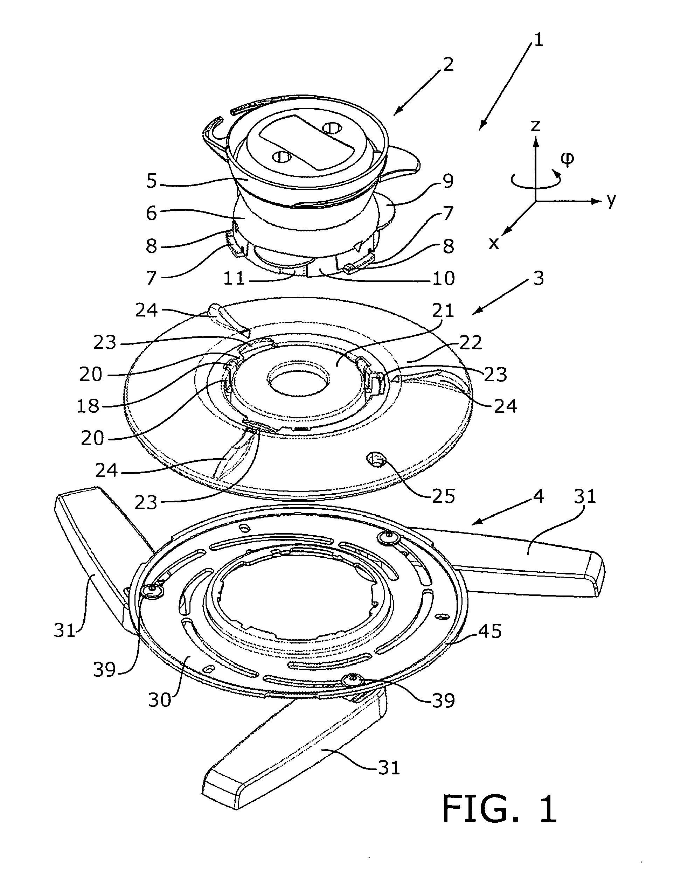

Figure 1 shows a perspective view of an assembly 1 according to the invention, which comprises a support 2, a locking element 3 and a carrier 4.

The support 2 comprises two pivotally interconnected parts 5, 6, with the part 6 being pivotable with respect to the part 5 both about the x-axis and about the y-axis for adjusting the position of the apparatus to be supported by the assembly. The adjusted angle can be fixed by fixing means (not shown). The part 6 is circular in shape and provided with three evenly spaced flanges 7 along the outer side. Each flange 7 is provided with a cam 8 extending in the direction of the part 5. The part 6 is further provided with three moon-shaped segments 9 which are evenly spaced along the circumference, which segments are positioned closer to the part 5 than the flange 7. The segments 9 are furthermore staggered with respect to the flanges 7. The outer wall 10 of the part 6 is provided with notches 11 at the location of the segments 9.

The locking element 3 is disc-shaped and preferably made of a plastic material.

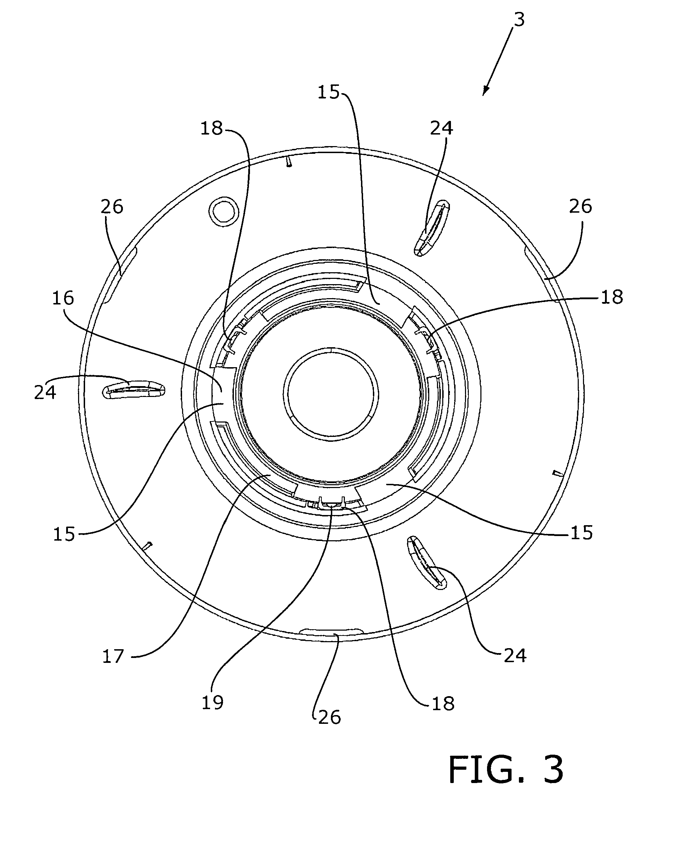

As is clearly shown also in figure 3, the locking element 3 is provided with three slots 15, which each have a relatively wide part forming a recess 16 and a relatively narrow part 17 contiguous thereto. The dimension of the recess 16 is such that the flange 7 of the support 2 can be moved therethrough. The dimension of the part 17 is such that the wall 10 of the support 2 can be moved therethrough.

The locking element 3 furthermore comprises three spring lips 18, each provided with a cam 19. Each lip 18 is flanked on either side by bridge portions 20, by means of which an inner part 21 of the locking element 3 is connected to an upper part 22 of the locking element 3.

The locking element 3 further comprises three moon-shaped segments 23 extending in the direction of the support 2, which segments are positioned on the outer part 22 at the location of the recesses 16.

The locking element 3 further comprises three operating handles 24 which are arranged in evenly spaced relationship along the circumference, as well as an opening 25 extending through the outer part 22.

The upper part 22 is provided along its outer circumference with three inwardly extending engaging flanges 26.

The carrier 4 comprises a plate 30, preferably of a metal, and three arms 31 connected thereto.

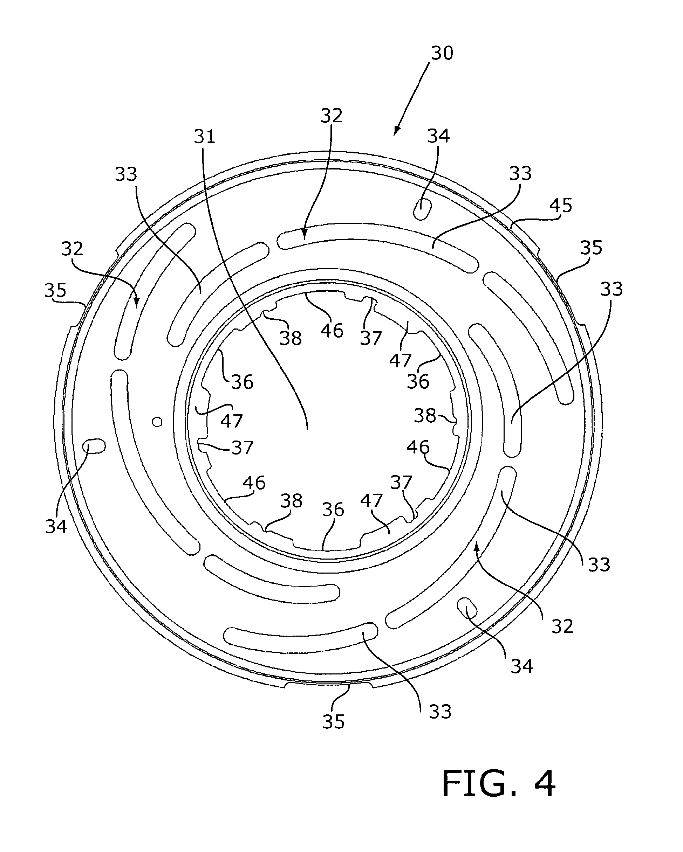

As is clearly shown also in figure 4, the metal plate 30 is provided with a central opening 31 and three spirally disposed slots 32, which are each built up of a number of slot segments 33. The plate 30 is further provided with three openings 34, which are arranged in evenly spaced relationship along the circumference of the plate, and with three, likewise circumferentially provided engaging recesses 35. The location and the shape of the engaging recesses 35 in the plate 30 are such that the engaging flanges 26 of the locking element 3 can be positioned therein.

Three recesses 36 are provided at regular intervals along the circumference of the inner side of the plate 30, which recesses correspond to the recesses 16 of the slots 15 in the locking element 3. The inner side is further provided with three notches 37 which are arranged in evenly spaced relationship along the circumference, in which cams 8 of the flanges 7 of the support 2 can be positioned, as will be explained in more detail yet hereinafter.

Furthermore, three lip recesses 38 are provided at regular intervals along the circumference of the inner side, in which recesses cams 19 of the lips 18 of the locking element 3 can be positioned, as will be explained in more detail yet hereinafter.

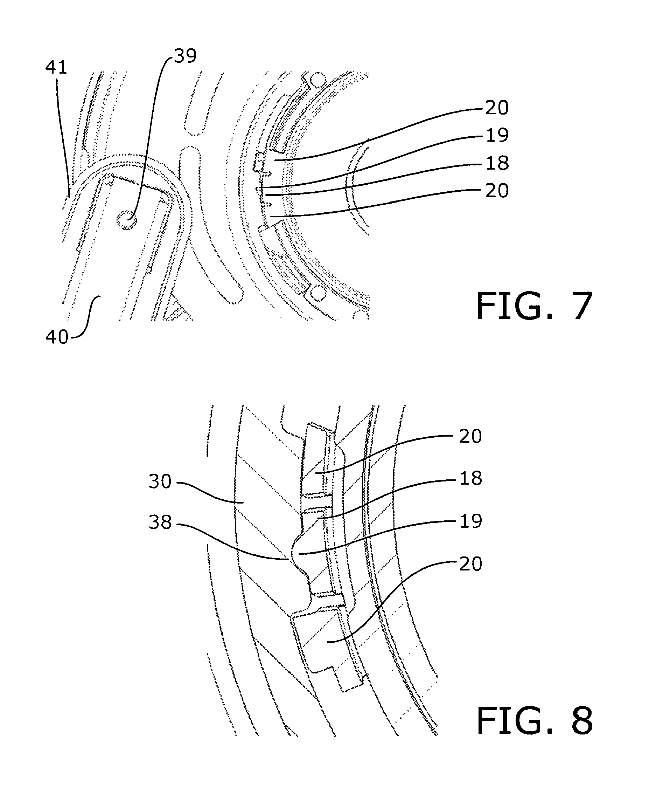

The arms 31 each comprise a metal arm part 40 (see figure 7) and a plastic part 41, which can be positioned over the metal part 40. The arms 31 are fixed to the plates 30 by means of bolts 39 passed through the slots 32.

It will be understood that the support 2, the locking element 3 and the carrier 4 are so dimensioned that they can mate in the manner described below.

To mount an apparatus (not shown) to, for example, a wall or a ceiling by means of the assembly 1 according to the invention, the support 2 is mounted to the wall or the ceiling. It is also possible, however, to position the support 2 on a supporting surface, for example a table.

The metal arm parts 40, which are not connected to the plate 30 yet, are attached to the apparatus (not shown) with one end, for example by means of a bolt. Then the plastic arm parts 41 are positioned over the metal arm parts 40, so that the attachment between the metal arm parts 40 and the apparatus is hidden from view by the plastic covers 41. The metal arm parts 40 are then connected to the metal plate 30 via the slots 32.

Following that, the locking element 3 is so positioned with respect to the metal plate 30 that the engaging flanges 26 can be passed through the engaging recesses 35, whereupon the engaging flanges 26 are positioned under an outer edge 45 of the metal plate 30 through rotation of the locking element 3 with respect to the metal plate 30, thereby interconnecting the locking element 3 and the metal plates 30. The locking element 3 is rotated in the direction indicated ϕ until the cams 19 of the spring lips 18 are positioned in the lip recesses 38. In this position of the locking element 3 and the carrier 4 relative to each other the recesses 16, 36 are in alignment with each other.

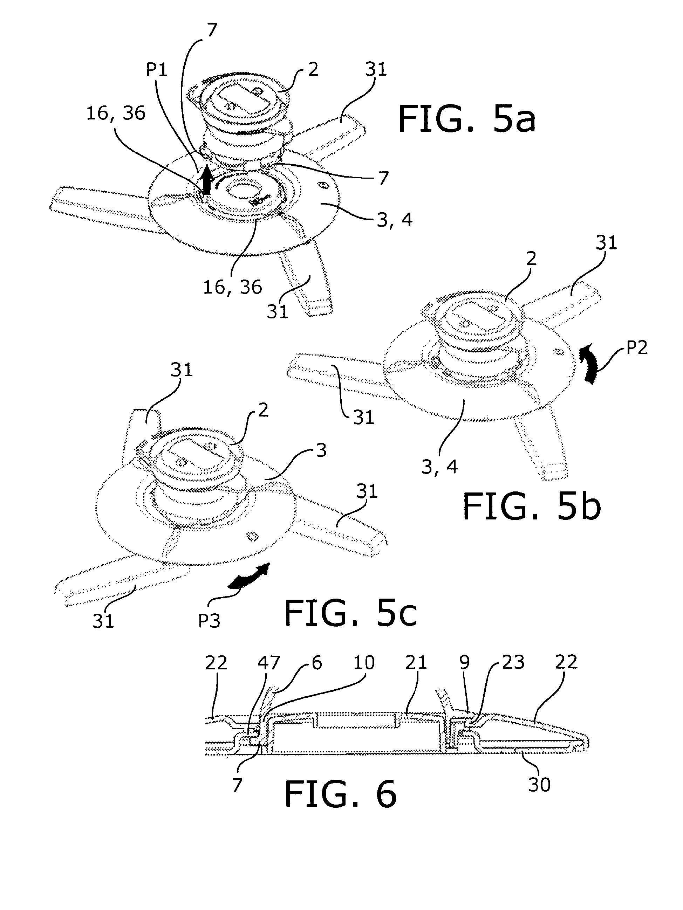

Then the locking element 3 and the carrier 4 are positioned opposite the support 2 in such a manner that the flanges 7 can be passed through the aligned recesses (see figure 5a). Upon and after insertion of the flanges 7 in the direction indicated by the arrow P1 through the recesses 16, 36, the wall 10 of the part 6 of the support 2 abuts against the lips 18, so that the lips 18 with the cams 19 firmly engage in the lip recesses 38 and the lips 18 cannot be moved out of engagement with the lip recesses 38. In this way the locking element 3 is retained in the first position with respect to the carrier 4 in a simple manner.

Subsequently (as shown in figure 5b) the locking element 3 and the carrier and 4 are jointly rotated about the z-axis in the direction indicated by the arrow P2 with respect to the support 3, with the flanges 7 moving along a side of strips 47 of the plate 3 remote from the part 5 of the support 2, whilst the moon-shaped segments 9 move over the side of the locking element 3 that faces towards the part 5. The locking element 3 and the carrier 4 are rotated in the direction indicated by the arrow P2 until the cams 8 of the flanges 7 engage in the recesses 37. In this position the spring lips 18 are positioned opposite the notches 11 in the support 2, and the locking element 3 and the carrier 4 are connected to the support 2 via the bayonet-type connection.

Then the locking element 3 is rotated in the direction indicated by the arrow P3 with respect to the support 2, causing the spring lips 18 to move out of engagement with the lip recesses 38. Simultaneously therewith, the moon-shaped segments 23 of the locking element 3 are positioned under the moon-shaped segments 9 of the support 2, with the moon-shaped segments 9 exerting a pressure on the locking element 3, so that a solid fixation of the support 2, the locking element 3 and the carrier 4 is obtained. The cams 8 cannot be moved out of the recesses 37 in this position, so that the bayonet-type connection is locked.

The operating handles 24 make it easier to rotate the locking element 3 with respect to the support 2 and/or the carrier 4. The locking element 3 is locked against rotation in the direction indicated by the arrow P3 once the lips 18 and the bridge portions 20 present on either side thereof are positioned in the recesses 46. In this second position of the locking element 3, the recesses 16, 36 are no longer in alignment and it is not possible, therefore, to release the bayonet-type connection. In this second position, one of the openings 34 in the metal plate 30 is positioned opposite the opening 25 in the locking element 3. Subsequently a padlock can be inserted through said aligned openings 25, 34.

To detach the carrier 4 from the support 2, the padlock is first removed by the rightful owner, after which the locking element 3 is rotated in the opposite direction of the arrow P3 until the recesses 16, 36 are in alignment with each other. Following that, the locking element 3 and the carrier and 4 are jointly rotated in the opposite direction of the arrow P2 until the flanges 7 are in alignment with the recesses 16, 36. Then the locking element 3 and the carrier 4 are moved in a direction opposed to the direction indicated by the arrow P1, thereby detaching the locking element 3 and the carrier 4 and the apparatus connected thereto from the support 2.

If desired, the apparatus can now be placed on a supporting surface together with the locking element 3, in which position it is supported on the operating handles 24.

As is clearly shown in figure 6, each flange 7 is in engagement with a strip 47 of the metal disc 30 in the coupled position, and each moon-shaped segment 9 of the support 2 abuts against the moon-shaped segments 3 of the locking element 33.

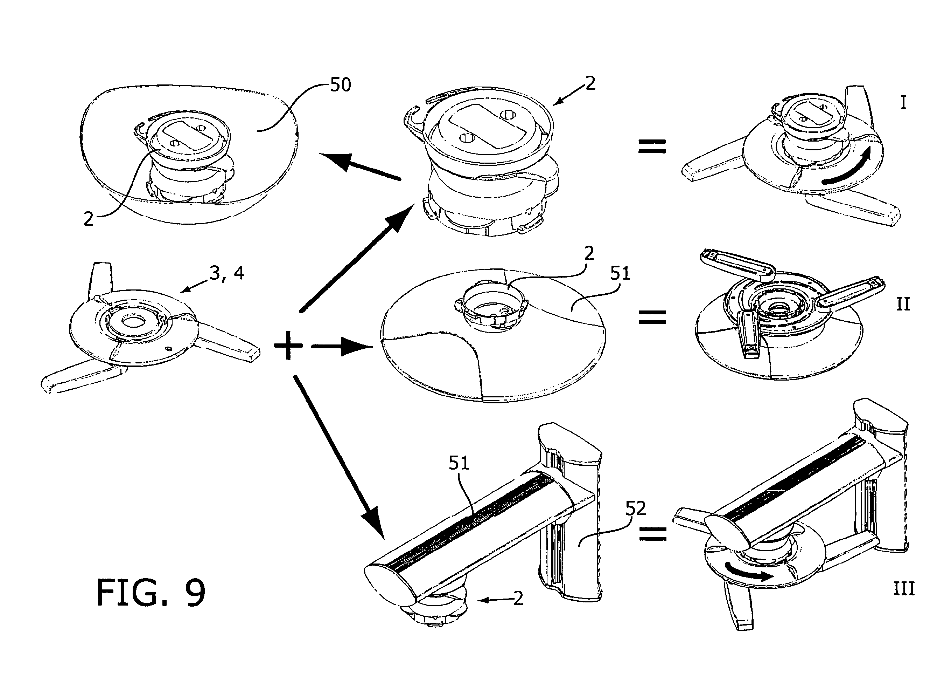

Figure 9 shows various applications of combinations of the support 2 on the one hand and the locking element 3 with the carrier 4 on the other hand. Situation I shows the support 2, which may be provided with a cover 50, if desired, in mounted position on a ceiling, to which support a carrier 4 connected to an apparatus and a locking element 3 can be connected.

It is also possible to place the support 2 on a supporting surface via a base 51, after which the apparatus, the carrier 4 and the locking element 3 can be connected to the support (situation II).

It is also possible to mount the support 2 on a wall by means of a horizontally extending arm and a vertical support 2. Subsequently, the locking element 3, the carrier 4 and the apparatus connected thereto can be suspended from the support 2 in the above-described manner (situation III).

It is also possible to attach the support to the apparatus to be supported and to mount the carrier on a wall or place it on a supporting surface.

Furthermore it is possible to connect more or fewer than three arms to the plate. The number of slots in the plate may be adapted accordingly in that case. It is also possible, however, to connect four arms to three slots, for example.

## Claims

1. An assembly suitable for supporting an apparatus, which assembly at least comprises a support and a carrier to be attached to the apparatus, which carrier can be detachably coupled to the support by way of a bayonet-type connection, said support and said carrier being rotatable about an axis of rotation relative to each other, **characterised in that** the assembly further comprises a locking element which is rotatable about said axis of rotation relative to the support and the carrier from a first position, in which the carrier and the locking element can be coupled to the support by way of the bayonet-type connection, to a second position, in which the bayonet-type connection is locked by the locking element.

2. An assembly according to claim 1, **characterised in that** the bayonet-type connection comprises a flange connected to the support as well as recesses formed in the carrier and in the locking element, which are positioned opposite each other in the first position of the locking element, through which recesses the flange can be positioned, after which the carrier and the locking element are rotatable about the axis of rotation with respect to the support.

3. An assembly according to claim 2, **characterised in that** the recesses present in the carrier and in the locking element are staggered relative to each other in the second position.

4. An assembly according to claim 2 or 3, **characterised in that** the flange comprises a cam which can be positioned in at least one notch formed in the carrier through rotation of the carrier and the locking element relative to the support after the flange has been inserted into the recesses in the carrier and the locking element.

5. An assembly according to any one of the preceding claims, **characterised in that** the locking element and the carrier are locked against rotation relative to each other while the flange is being positioned in the recesses formed in the carrier and the locking element.

6. An assembly according to claim 5, **characterised in that** at least one spring lip connected to the locking element is positioned in at least one lip recess formed in the carrier, or vice versa, in the first position of the locking element relative to the carrier.

7. An assembly according to claim 6, **characterised in that** the support is provided with at least one notch formed in the circumference thereof, with the spring lip being retained in the lip recess by the support after the flange has been passed through recesses formed in the carrier and the locking element, whilst the spring lip is positioned opposite the notch in the support after rotation of the carrier and the locking element relative to the support.

8. An assembly according to any one of the preceding claims, **characterised in that** the locking element and the carrier are each provided with at least one opening, which openings are positioned opposite each other in the second position, whilst the assembly is furthermore provided with a lock that can be positioned through said opposite openings.

9. An assembly according to any one of the preceding claims, **characterised in that** the locking element and the carrier are circular in shape, with the locking element being provided near the outer side with at least one inwardly extending engaging flange, which can be positioned in at least one engaging recess in the carrier, after which the carrier and the locking element can be rotated about the axis of rotation relative to each other to the first position.

10. An assembly according to any one of the preceding claims, **characterised in that** the locking element is provided with at least one operating handle on a side remote from the carrier.

11. An assembly according to any one of the preceding claims, **characterised in that** the carrier is provided with a number of spiral-shaped slots as well as with a number of supporting arms, a first end of which is positioned in one of said slots, whilst a second end remote from said first end can be connected to the apparatus to be supported.

12. An assembly according to claim 11, **characterised in that** the supporting arms are provided with covers.

13. As assembly according to any one of the preceding claims, **characterised in that** the carrier, the support and/or the locking element are made of a plastic material, a metal, etc.

14. A carrier suitable for use with an assembly according to any one of the preceding claims.

15. A support suitable for use with an assembly according to any one of the preceding claims.

16. A locking element suitable for use with an assembly according to any one of the preceding claims.
